# EUROPEAN PATENT APPLICATION

(11) **EP 2 701 104 A1**
(43) Date of publication of application: **26.02.2014**
(21) Application number: 13181594.6
(22) Date of filing: 23.08.2013
(51) Int. Cl.: G06Q 10/02, G06Q 10/06, G06Q 30/02, G06Q 50/10

(54) **Method and device for issuing reservation number through short-range wireless communication**

(30) Priority: 24.08.2012 KR 20120093293
(71) Applicant: Samsung Electronics Co., Ltd, Gyeonggi-do 443-742 (KR)
(72) Inventor: Kim, Ho-dong, Seoul (KR); Moon, Bo-seok, Gyeonggi-do (KR); Jung, Hee-won, Gyeonggi-do (KR)
(74) Representative: Birchenough, Lewis

(57) **Abstract**

Provided is a service information providing method of a user terminal. The method includes: transmitting a service information request including user information of the user terminal to a service providing terminal through short-range wireless communication; receiving service information corresponding to the service information request and additional information according to the user information in the service information request from the service providing terminal; and displaying the received service information and additional information.

## Description

### CROSS-REFERENCE TO RELATED APPLICATIONS

This application claims the priority benefit of Korean Patent Application No. 10-2012-0093293, filed on August 24, 2012, in the Korean Intellectual Property Office, the disclosure of which is incorporated herein in its entirety by reference.

### BACKGROUND

### 1. Field

Embodiments relate to a method and device for issuing a waiting number ticket through short-range wireless communication during service, and more particularly, to a method and device for transmitting user information through short-range wireless communication and issuing a waiting number ticket. Service may be an operation of device for specific purpose.

### 2. Description of the Related Art

When service reservation is required, for example, in hospitals, amusement parks, banks, or theatres, a user needs to supply user personal information to a service provider in order to provide identification validation and make a reservation.

Moreover, short-range wireless communication techniques such as Bluetooth, Zigbee, or Near Field Communication (NFC) are applied to various portable terminals.

Accordingly, in order to eliminate the inconvenience in which a user directly needs to deliver user personal information to a service provider, the user simply delivers the user information from a user terminal to the service provider through short-range wireless communication of a portable terminal and receives a reservation number during service reservation. Therefore, a user's service reservation may be completed in consideration of user information without directly delivering the user information.

### SUMMARY

In an aspect of one or more embodiments, there is provided a system and method for transmitting user information relating to a specific service to a service provider through short-range wireless communication in order to issue a reservation number corresponding to the specific service by a user terminal, and receiving the issued reservation number generated based on the transmitted user information.

In an aspect of one or embodiments, there is provided a system and method of receiving user information relating to the specific service through short-range wireless communication and generating and transmitting service information on the basis of the received user information.

In an aspect of one or more embodiments, there is provided a service information providing method of a user terminal, the method including: transmitting, through short-range wireless communication, a service information request including user information of the user terminal to a service providing terminal providing a service to the user terminal; receiving service information corresponding to the service information request and additional information according to the user information in the service information request from the service providing terminal; and displaying the received service information and additional information.

According to an aspect of one or more embodiments, there is provided at least one computer readable medium storing computer readable instructions to implement methods of one or more embodiments when executed by at least one processor.

### BRIEF DESCRIPTION OF THE DRAWINGS

The above and other will become apparent and more readily appreciated from the following description of embodiments, taken in conjunction with the accompanying drawings of which:
FIG. 1 is a schematic view illustrating a service information providing system according to an embodiment;
FIG. 2 is a flowchart illustrating a service information providing method of a user terminal according to an embodiment;
FIG. 3 is a flowchart illustrating a method of providing service information by using a user terminal according to an embodiment;
FIG. 4 is a flowchart illustrating a method of determining a service to use when there is recommended service information received from a service provider in a method of providing service information by using a user terminal according to an embodiment;
FIG. 5 is a flowchart illustrating a service information providing method of a service providing server for using a service on the basis of user information according to an embodiment;
FIG. 6 is a flowchart illustrating a method of a service providing terminal providing service information according to an embodiment;
FIG. 7 is a flowchart illustrating a service information providing process of a service information providing system according to an embodiment;
FIG. 8 is a view illustrating a structure of a user terminal according to an embodiment;
FIG. 9 is a structural diagram illustrating a configuration of a service providing server according to an embodiment;
FIG. 10 is a structural diagram illustrating a configuration of a service providing terminal according to an embodiment;
FIG. 11 is a view illustrating a user interface for subscribing to or logging into a service information providing service according to an embodiment;
FIG. 12 is a view illustrating a user interface for receiving a location where the service is to be used from a user according to an embodiment;
FIG. 13A is a view illustrating a user interface for inputting when the recommended service is received from a service providing terminal according to an embodiment;
FIG. 13B is a view illustrating a user interface for receiving a service to use from a user according to an embodiment;
FIG. 13C is a view illustrating a user interface for receiving user information corresponding to a service from a user according to an embodiment;
FIG. 14 is a view illustrating a method of displaying service information and additional information on a user terminal according to an embodiment;
FIG. 15 is a view illustrating a method of displaying an alarm message in a reservation order in the terminal according to an embodiment;
FIG. 16 is a view illustrating a user interface for displaying information stored in a user terminal, receiving information transmitted as user information, and transmitting the received information;
FIG. 17A is a view illustrating user information stored in a user terminal according to an embodiment; and
FIG. 17B is a view illustrating a table for determining user information to be transmitted based on service according to an embodiment.

### DETAILED DESCRIPTION

Reference will now be made in detail to embodiments, examples of which are illustrated in the accompanying drawings, wherein like reference numerals refer to the like elements throughout. Embodiments are described below to explain the present disclosure by referring to the figures

In embodiments, when one part (or element, device, etc.) is referred to as being 'connected' to another part (or element, device, etc.), it should be understood that the former can be 'directly connected' to the latter, or 'electrically connected' to the latter via an intervening part (or element, device, etc.). Moreover, throughout the specification, the meaning of "include", "comprise", "including", or "comprising" specifies a property, a region, a fixed number, a step, a process, an element and/or a component but does not exclude other properties, regions, fixed numbers, steps, processes, elements and/or components. As used herein, the term "and/or" includes any and all combinations of one or more of the associated listed items. Expressions such as "at least one of," when preceding a list of elements, modify the entire list of elements and do not modify the individual elements of the list.

Embodiments will be described in more detail with reference to the accompanying drawings.

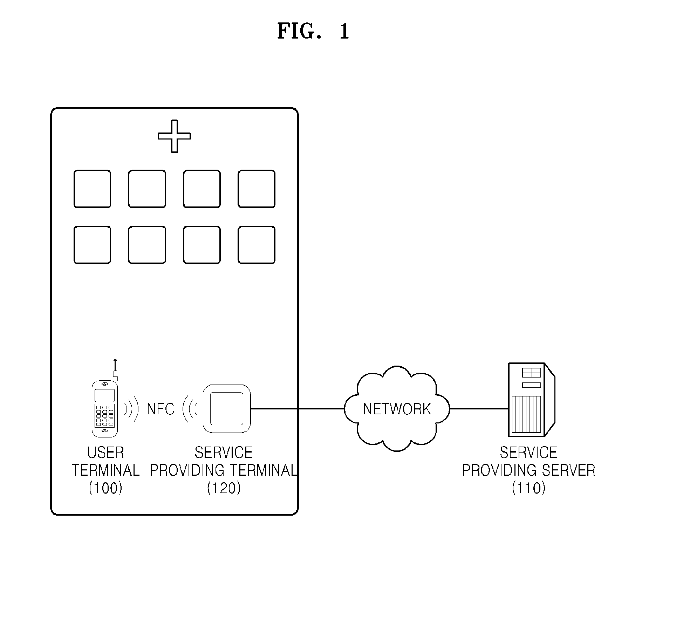

FIG. 1 is a schematic view illustrating a service information providing system according to an embodiment.

When a user terminal 100 connects to a service providing terminal 120 by establishing a short range wireless communication connection with a service providing terminal 120, it may transmit user information for service to the service providing terminal 120 in order to request service information. The user information may be included in a service information request that is transmitted to the service providing terminal 120. The service information request is information that requests service information. Additionally, the service information refers to information provided according to a service use. For example, when a user uses a hospital treatment reservation service, service information may include information on a hospital reservation number and a department in the hospital where medical services are to be performed.

Service may be provided through a service providing terminal 120 and a service providing server 110. For example, hospital treatment reservation service, bank reservation number issuing service, and advertisement information providing service may be included in service. Service may be an operation of device for specific purpose in this specification.

The service providing terminal 120 may be connected to the service providing server 110 as shown in FIG. 1. Additionally, the service providing server 110 may be integrated with the service providing terminal 120 and provided as one device.

According to an embodiment, the service providing terminal 120 may transmit the service information request (that the user terminal 100 transmits through short-range wireless communication) to the service providing server 110 through a network.

The service providing server 110 may transmit service information and additional information, which are generated based on the received service information request, to the user terminal 100. Alternatively, the service providing server 110 may transmit service information and additional information to the user terminal 100 through the service providing terminal 120.

The service information is information provided according to service. For example, when restaurant reservation number issuing service is provided, service information may be reservation information including a reservation number issued by a restaurant reservation number issuing service.

The reservation information as information for a service reservation result may include information on a reservation result such as a reservation number and a reservation service. For example, in the case of a hospital treatment reservation service, reservation information may include information on a reserved waiting number and a reserved department in the hospital where medical services are to be performed.

According to an embodiment, service information may include reservation information for service. The reservation information for service may be a number indicating a hospital treatment number, for example. Additionally, according to a priority number in the reservation information transmitted to the user terminal 100, an alarm or a message may be transmitted to the user terminal 100.

The user terminal 100 may display the received service information, additional information, alarm or message on a screen of the user terminal 100.

Although the service providing server 110 is separately located from the service providing terminal 120 as shown in FIG. 1, it may be located at the same place as the service providing terminal 120. Additionally, the service providing server 110 and the service providing terminal 120 may not be connected to each other through a network and may be integrated as one.

FIG. 1 is a schematic view illustrating a service information providing system according to an embodiment, but embodiments are not limited thereto.

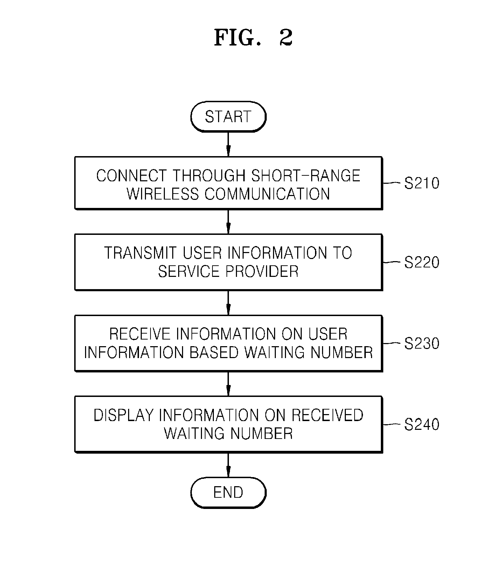

FIG. 2 is a flowchart illustrating a service information providing method of a user terminal according to an embodiment.

First, the user terminal 100 connects to the service providing terminal 120 through short-range wireless communication in operation S210.

Then, a service information request including user information is transmitted to the service providing terminal 120 through the connected short-range wireless communication in operation S220. The user information relates to a specific service and may be selected by a user from among information stored in the user terminal.

According to an embodiment, operation S220 may include selecting user information relating to a service and transmitting a service information request including the selected user information to the service providing terminal 120. For example, when service to be used is a hospital treatment reservation service, the user terminal 100 selects user information including a gender, an age, and a weight, and transmits a service information request including the selected user information to the service providing terminal 120.

According to an embodiment, a user interface for selecting user information to be transmitted to the service providing terminal 120 is outputted to a user terminal, and according to a user input inputted through the outputted user interface, user information to be transmitted to the service providing terminal 120 may be determined.

Then, the user terminal 100 may receive user information based service information (e.g. a waiting number) and additional information from the service providing terminal 120 in operation S230.

Additionally, according to an embodiment, the additional information may include information to establish a wireless communication connection with the service providing terminal 120. For example, the additional information may include a service set identifier (SSID) and a password for Wi-Fi connection. The user terminal 100 establishes a Wi-Fl connection by using the SSID and password included in the received additional information, and transmits data through Wi-Fi communication. The information for wireless communication may include information for various wireless communication connections such as information for Wi-Fi connection and information for Bluetooth pairing.

Then, the user terminal 100 may display the received service information such as information on a received waiting number and additional information in operation S240.

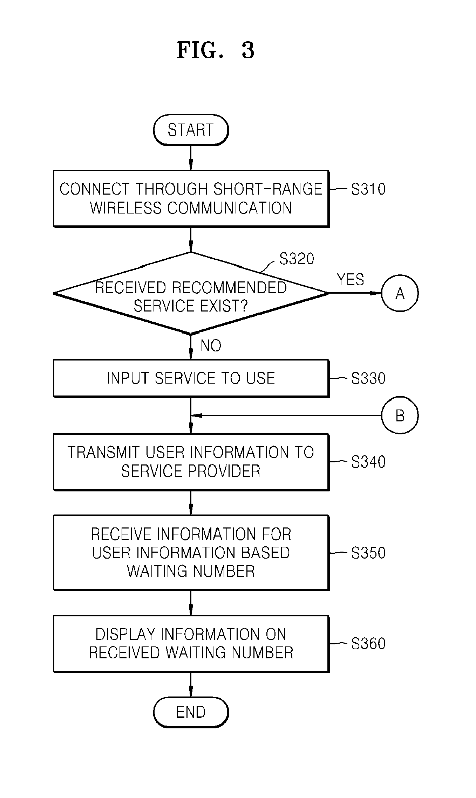

FIG. 3 is a flowchart illustrating a method of providing service information by using a user terminal according to an embodiment.

The user terminal 100 connects to the service providing terminal 120 through short-range wireless communication in operation S310. The short-range wireless communication may be regulated by a wireless communication protocol such as Near Field Communication (NFC), Bluetooth, or Zigbee.

Once connected to the service providing terminal through short-range wireless communication, the user terminal 100 determines whether there is a recommended service received from the service providing terminal 120 in operation S320.

If there is no recommended service to be received or received recommended service, a user interface for receiving information on a service to use is outputted on a display of the user terminal 100, and the service to use is determined according to an input on the outputted user interface in operation S330.

According to an embodiment, the user terminal 100 may display an available service list and may select a service to use according to a user input on the displayed available service list.

When there is only one available service or if the available service is predetermined, operation S320 and operation S330 may be omitted.

Then, the user terminal 100 may transmit a service information request including user information to the service providing terminal 120 through short-range wireless communication in operation S340.

According to an embodiment, the user information may be information stored in the user terminal 100 or information selected according to a service to use from among information inputted through the user terminal 100.

The user information may include at least one of user identification information, identification information of a user terminal, a type of a service to use, an e-mail address, a user level, information on reservation priority, a user's service history, and information requesting a reservation for a service.

The user identification information, which is information for identifying a user, may include an ID and a password. The user identification information may be stored in the user terminal 100 or may be inputted by a user.

The identification information of a user terminal, which is information for identifying a user terminal, may include a phone number of a user terminal, an MAC address (i.e., a hardware specific number of a user terminal), and a Universally Unique Identifier (UUID).

According to an embodiment, user information transmitted to the service providing terminal 120 may include information on a type of user information corresponding to service, and may be determined according to a table between a service stored in the user terminal 100.

According to an embodiment, when the user terminal 100 receives information on a type of user information provided from the service providing terminal 120, user information transmitted to the service providing terminal 120 may include information corresponding to the received type of user information among user information stored in the user terminal 100 or information corresponding to the received type of user information among user information inputted from a user.

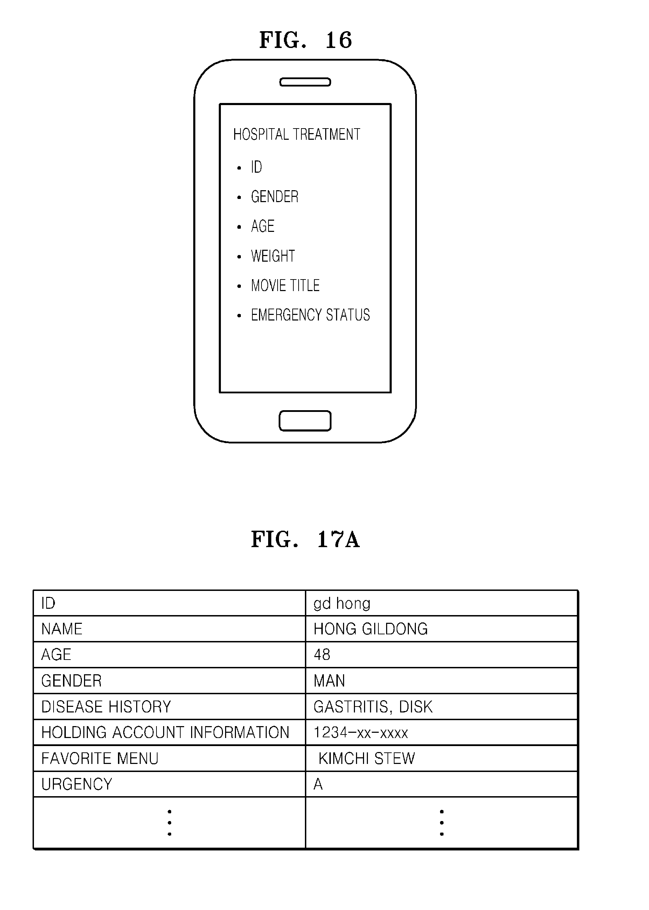

According to embodiment, as shown in FIG. 16, user information transmitted to the service providing terminal 120 may be determined by displaying user information stored in the user terminal 100 and selecting an input of a user from the displayed user information.

A service to be used through a terminal may be divided according to information on a service classification or a location where the service is to be used. For example, service may include hospital treatment, banking, restaurant reservation, and movie reservation.

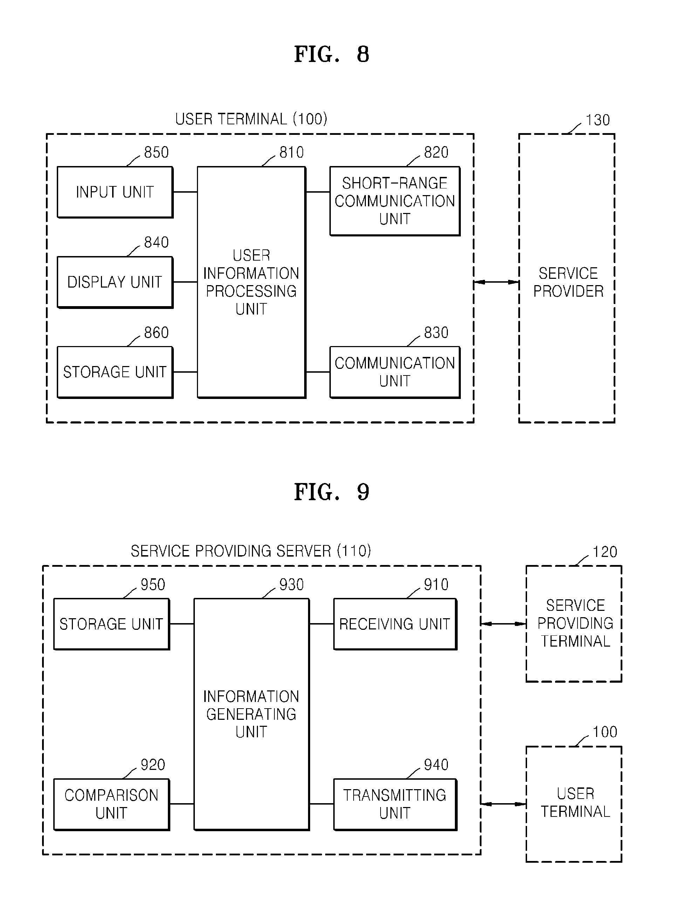

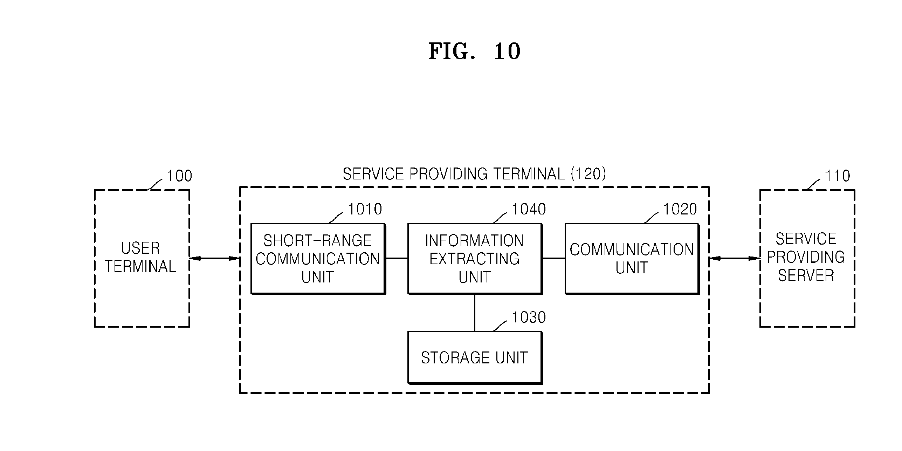

Information on service or a location where the service is to be used may be inputted through an input unit 850 (see Fig. 8) of the user terminal 100, may receive information stored in a storage unit 1030 (see Fig. 10) of the service providing terminal 120 installed at a location where the service is to be used, or may be determined through position information obtained from a device in the user terminal 100 such as Global Positioning System (GPS) receiver. For example, if position information obtained through an application processing map information is determined as a position of a hospital, a service may be determined as hospital treatment

Additionally, the user terminal 100 may determine a service on the basis of information on a location where the service is to be used. For example, when an inputted location where the service is to be used is a 'hospital', a specific service may be determined as "hospital treatment".

An e-mail address refers to an address used for transmitting e-mail to a user.

A user rating, which is a rating assigned to a user, may be used as a reference when a reservation number is generated. For example, when a user who has an "excellent member" rating and a user who has a "good member" rating transmit user information almost at the same time, a reservation number for the user having an "excellent member" rating is generated first.

A service use history of a user is stored information that includes a user's accumulated service records. For example, the service use history may include user's previous medical record, banking history, restaurant order history, and movie reservation history.

Information requesting a reservation for service is information used for reserving a service use for a user. For example, when a service to be reserved is hospital service, information requesting a reservation for service may include user's name, weight, symptom, medical subject, disease history, and reservation number. Additionally, for example, when a service to be reserved is a bank service, information requesting a reservation for service may include specific banking business such as deposit, withdrawal, and exchange and a waiting number. Additionally, for example, when a service to be reserved is a restaurant reservation service, information requesting a reservation for service may include a menu and order quantity. Additionally, when a service to be reserved is movie reservation service, a request about a reservation for service may include information on a movie and a show time.

User information transmitted to the service providing terminal 120 in operation S330 may be collected on the basis of classification of a service to use. For example, when a service to use is a hospital treatment service, user identification information, a disease history, and a medical department may be provided to a service provider.

Referring to FIG. 8, user information may be stored in a storage unit 860 of the user terminal 100, or may be inputted by a user through an input unit 850.

According to an embodiment, a request for user information may be received from the service providing terminal 120, and user information corresponding to the received request may be transmitted to the service providing terminal 120.

According to an embodiment, after information on a location where the service is to be used is received, user information to be transmitted to the service providing terminal 120 may be collected on the basis of information on the received location where the service is to be used.

The information on a location where the service is to be used may be inputted through the user terminal 100, or may be stored in the storage unit 1030 (see Fig. 10) of the service providing terminal 120 installed at a location where the service is to be used.

Additionally, according to an embodiment, identification information of service to be provided from the service providing terminal 120 may be received through short-range wireless communication, and user information corresponding to the received identification information may be collected. For example, when identification information corresponding to hospital treatment is received as identification information related to a service that is provided by a service provider, user identification information, a disease history, and a medical subject may be provided to a service provider 130.

Then, the user terminal 100 may receive additional information on the basis of service information corresponding to a transmitted service information request and user information in operation S350. Service information and additional information may include a text message or alarm through a mobile communication network or short-range communication.

The service information may include at least one of reservation information (e.g. waiting number) of a user for a service to use and information on the number of people waiting for reservation service. Additionally, the additional information may include user information based advertisement information.

The user information based advertisement information may include advertisement information that the service providing server 110 selects according to user information. For example, when user information includes information on sex, an age, and an area of interest, advertisement information may include information selected according to a user's sex, age, and an area of interest.

Additionally, according to an embodiment, advertisement information may be received by the user terminal in a form of a Short Message Service (SMS) message, Uniform Resource Location (URL) information, or data to be displayed on a dedicated application. Additionally, advertisement information may be received from the service providing terminal 120 or the service providing server 110 through various methods such as wireless communication and mobile communication, instead of short-range wireless communication and pre-connected short-range wireless communication such as Wi-Fi.

Information on a service may use history, user rating, and service mileage corresponding to the user information transmitted to the service providing terminal 120 may be additionally received, and the received information may be displayed through a display unit 840 of the user terminal 100.

Moreover, according to an embodiment, the user terminal 100 may receive information relating to a position of the service providing terminal 120 from the service providing terminal 120. The user terminal 100 may select user information according to the information relating to a position of the service providing terminal 120 and may transmit the selected user information. For example, when the service providing terminal 120 is located in a movie theater, the user terminal 100 may select information on a member rating, a member ID, and a favorite movie as user information.

Then, the user terminal 100 may display the received service information (e.g. received waiting number) and additional information through the display unit 840 of the user terminal in operation S360.

According to an embodiment, after the user terminal 100 receives service information including reservation information, if the user terminal 100 and the service providing terminal 120 are connected to each other again through short-range wireless communication, the user terminal 100 may transmit a cancel request on the reservation information to the service providing terminal 120.

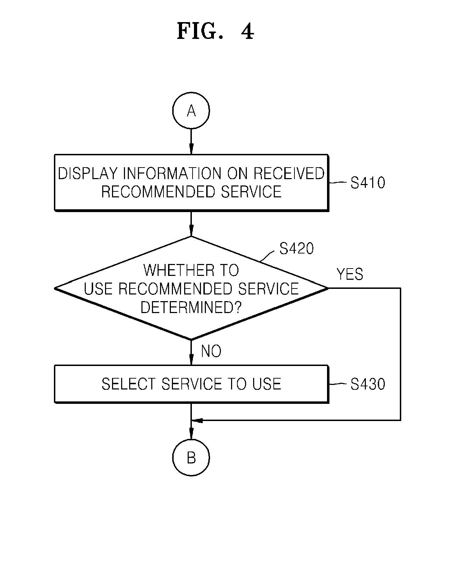

FIG. 4 is a flowchart illustrating a method of determining a service to use when there is recommended service information received from a service provider in a method of providing service information by using a user terminal according to an embodiment.

In operation S410, the user terminal 100 may display information on a recommended service received in operation S320 from the service providing terminal 120.

The recommended service may be stored in the storage unit 1030 of the service providing terminal 120. Moreover, the recommended service may be received from the service providing terminal 120 through short-range wireless communication between the user terminal and the service providing terminal 120.

Then, the received recommended service is displayed through the display unit 840 of the user terminal 100, and it is determined whether to use the recommended service in operation S420.

When it is determined not to use the recommended service in operation S420, as in operation S330, specific service may be determined by receiving an input of information on a service to use in operation S430.

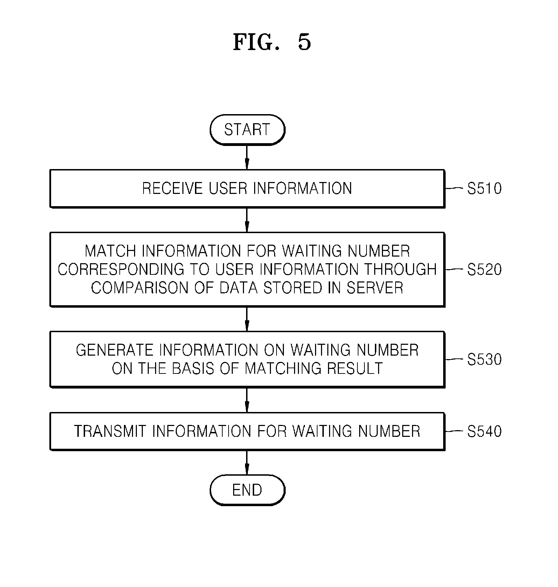

FIG. 5 is a flowchart illustrating a service information providing method of the service providing server 110 for using a service on the basis of user information according to an embodiment.

First, a service information request including user information transmitted from the user terminal 100 is received in operation S510. The service providing server 110 may receive a service information request from the service providing terminal 120, or may directly receive a service information request from the user terminal 100 through short-range wireless communication.

When the received user information includes information on a service to use, it may be stored as a service use history of a user in the storage unit 950 (see FIG. 9) of the service providing server 110.

Additionally, a service use history corresponding to user information is received, and a frequently used service is determined as a recommended service on the basis of the received service use history. The recommended service is transmitted to the user terminal 100.

Then, the service providing server 110 may generate additional information according to service information corresponding to a service information request and user information received in operation S510.

According to an embodiment, a service use history for a user stored in the service providing server 110 is matched to user information received in operation S520, and then service information is generated on the basis of a matching result in operation S530.

For example, a medical subject and a reservation priority may be determined according to a hospital medical record matching the received user information. Then, hospital treatment reservation is performed based on a matching result and then, service information for a hospital treatment reservation is generated.

Additionally, according to an embodiment, a service use history may be received by the service providing server 110 from the user terminal 100 storing the service use history or a third server.

Referring to FIG. 9, according to an embodiment, user information is matched to information on user classification stored in the storage unit 950 of the service providing server 110 and then, service information is generated on the basis of a priority set on the user classification.

For example, when user information is received from a plurality of users for a predetermined period of time, the received user information is matched to information on the user classification stored in the storage unit 950, and service information including a reservation number of a user having a priority set higher than a predetermined priority is generated.

Moreover, according to an embodiment, information on a location where the service is to be used is received from the user terminal 100 or the service providing terminal 120 and then, additional information is generated on the basis of the received location where the service is to be used. For example, when a location where the service is to be used is a specific restaurant, additional information may include information relating to the specific restaurant.

Additionally, the service information may include at least one of a reservation number, the priority number of the person waiting, a service use history, a user rating, and a service mileage. Additionally, the additional information may include advertisement information corresponding to user information.

According to an embodiment, service information may be generated on the basis of a service use history in user information. For example, a higher priority is given to a user who uses a service frequently over a predetermined period of time. The user terminal 100 may generate service information according to a set priority. For example, service information including a high priority reservation number for a user having a high priority may be generated.

The service providing server 110 may transmit service information and additional information, which are generated in operation S530, to the user terminal 100 or the service providing terminal 120 in operation S540.

The service information and additional information may be transmitted through short-range wireless communication, SMS, or via an additional mobile communication network. The additional mobile communication network may refer to a wireless communication network capable of data communication through communication methods such as Wideband Code Division Multiple Access (WCDMA) communication or Global System for Mobile communication (GSM).

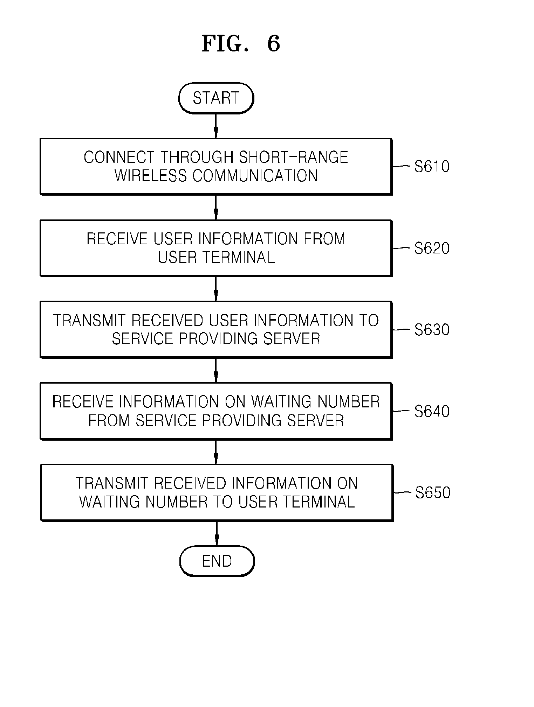

FIG. 6 is a flowchart illustrating a method of the service providing terminal 120 providing service information according to an embodiment.

First, the service providing terminal 120 connects to the user terminal 100 through short-range wireless communication in operation S610.

The service providing terminal 120 may request a type of user information that the user terminal 100 transmits to the user terminal 100.

A service information request including user information relating to a service is received from the user terminal 100 through short-range wireless communication in operation S620.

According to an embodiment, all or part of user information stored in the user terminal 100 may be received.

Additionally, referring to FIG. 10, according to an embodiment, the service providing terminal 120 may transmit information on at least one recommended service stored in the storage unit 1030 to the user terminal 100. Then, user information relating to a specific service corresponding to information on one recommended service transmitted from the user terminal 100.

The service providing terminal 120 transmits the received service information request to the service providing server 110 in operation S630.

According to an embodiment, the service providing terminal 120 may filter only user information corresponding to information on a specific service stored in the service providing terminal 120 from the received user information. The service providing terminal 120 transmits the filtered user information to the service providing server 110.

A location where the service is to be used information stored in the storage unit 1030 of the service providing terminal 120 may be transmitted together with request.

According to an embodiment, the location where the service is to be used information may include identification information of the service providing terminal 120.

Moreover, according to an embodiment, the location where the service is to be used information may include coordinates representing a position of the service providing terminal 120.

Then, service information and additional information generated based on the transmitted service information request are received in operation S640.

Then, the received service information and additional information are transmitted to the user terminal 100 in operation S650.

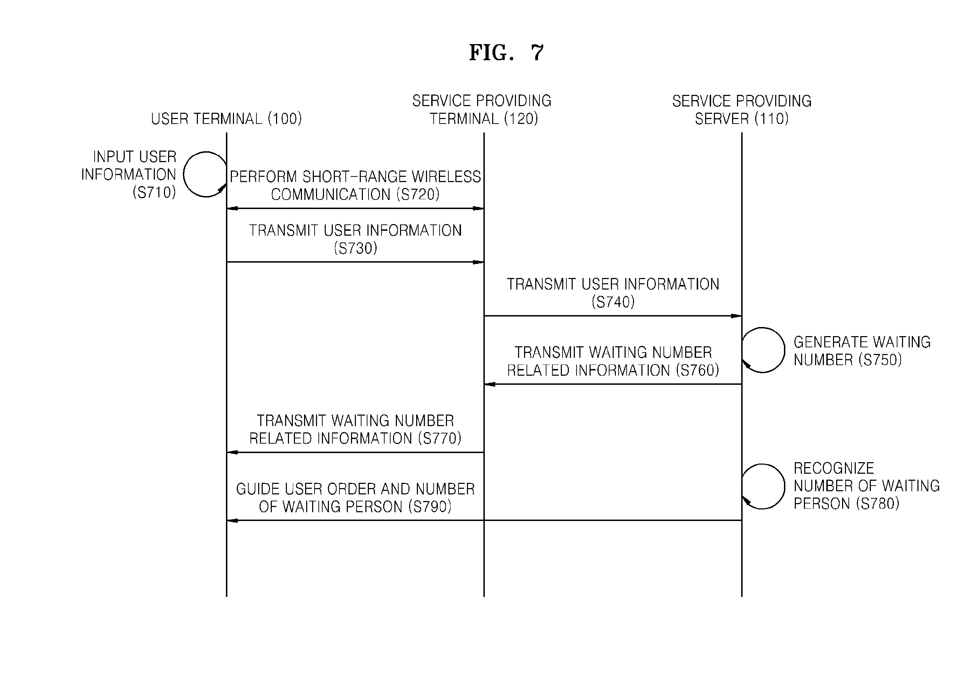

FIG. 7 is a flowchart illustrating a service information providing process of a service information providing system according to an embodiment.

As shown in FIG. 7, the service providing terminal 120 may be separated from the service providing server 110, or the service providing server 110 may be configured to have a function of the service providing terminal 120.

First, user information is inputted to the user terminal 100 in operation S710.

A login is performed using a user ID corresponding to user identification, and user information may be stored in correspondence to the logged in user ID.

Additionally, the user terminal 100 may display only the user identification information corresponding to the logged in user ID on the user terminal 100.

Then, a short-range wireless communication connection is established between the user terminal 100 and the service providing terminal 120 in operation S720.

Then, the user terminal 100 transmits user information to the service providing terminal 120 through short-range wireless communication in operation S730. The user information may be included in a service information request that is transmitted to the service providing terminal 120 and then transmitted along with the a service information request.

Then, the service providing terminal 120 transmits the service information request including the received user information to the service providing server 110 in operation S740.

Then, the service providing server 110 generates a waiting number on the basis of the received user information in operation S750. The waiting number may be information included in reservation information. Additionally, the reservation information may be included in service information.

Although not shown in the drawing, after the service information and the additional information are generated in operation S750 and the short-range wireless communication connection established in operation S720 is terminated, and when a short-range wireless communication connection is re-established between the user terminal 100 and the service providing terminal 120, the reservation number generation in operation S750 may be cancelled.

Then, the service providing server 110 may transmit service information including the generated waiting number and additional information including waiting number related information to the service providing terminal 120 in operation S760.

Then, the service providing terminal 120 transmits the received waiting number related information to the user terminal 100 in operation S770.

Then, the service providing server 110 recognizes the priority related to the number of person waiting of a service for the generated waiting number in operation S780.

On the basis of the number of waiting person recognized by the service providing server 110, a message or a call alarm may be transmitted to the user terminal 100 according to the priority of the transmitted waiting number, or information on the number of waiting person may be transmitted to the user terminal 100 in operation S790.

The service providing server 110 may select a user terminal to which a call alarm is to be transmitted. The service providing server 110 determines a waiting number to call, and transmits a call alarm to the user terminal 100 transmitting reservation information including the waiting number to call.

In order to determine a waiting number to call, the user terminal 100 may not simply determine a waiting number to call based on a predetermined order of waiting numbers to call, but may determine a waiting number to call on the basis of user information such as a service use history of a user terminal transmitting a reservation number, a user rating or a user priority.

For example, if service is frequently used, a user rating is high, or a priority is high, a call alarm may be transmitted to a user terminal transmitting a waiting number '10' earlier than a user terminal transmitting a waiting number '9'.

FIG. 8 is a structural diagram illustrating a configuration of a user terminal according to an embodiment.

The user terminal 100 may include a short-range communication unit (short-range communicator) 820 transmitting specific service related user information to the service providing terminal 120 through short-range wireless communication, a communication unit (communicator) 830 receiving service information and additional information from the service providing terminal 120, a display unit (display) 840 displaying the received service information and additional information, an input unit 850 inputting user information and selecting service, a storage unit 860 storing user information, and a user information processing unit (user information processor) 810 collecting service related information as the user information, transmitting the user information to the service provider through the short-range communication unit 820, receiving service information and additional information on the service through the communication unit 830, and displaying the received service information and additional information through the display unit 840.

FIG. 9 is a structural diagram illustrating a configuration of a service providing server according to an embodiment.

The service providing server 110 may include a receiving unit (receiver) 910 receiving service request information including user information from the user terminal 100 through short-range wireless communication or receiving service request information from the service providing terminal 120, a comparison unit (comparator) 920 matching the received user information to information stored in a storage unit 950, an information generating unit (information generator) 930 generating additional information on the basis of service information corresponding to the received service information request and the received user information, a transmitting unit (transmitter) 940 transmitting the generated user information and additional information to the user terminal 100 or the service providing terminal 120, and the storage unit 950 storing at least one of user identification information, a service use history, and information on service classification.

The comparison unit 920 may generate service information and additional information by matching the received user information to information such as a user's service use history and a user rating stored in the storage unit 950. For example, when user information is received from a plurality of user terminals for a predetermined period, service information including a reservation number obtained by assigning a higher priority to a user having a higher user rating may be generated.

FIG. 10 is a structural diagram illustrating a configuration of the service providing terminal 120 according to an embodiment.

The service providing terminal 120 may include a short-range communication unit (short-range communicator) 1010 receiving a service information request including user information from the user terminal 100 through short-range wireless communication and transmitting service information and additional information to the user terminal 100, an information extracting unit (information extractor) 1040 collecting user information corresponding to a specific service from among the received user information, a communication unit (communicator) 1020 transmitting the received user information and information stored in a storage unit 1030 to the service providing server 110 and receiving service information and additional information from the service providing server 110, and the storage unit 1030 storing service identification information for identifying a specific service and information on a location where the service is to be used.

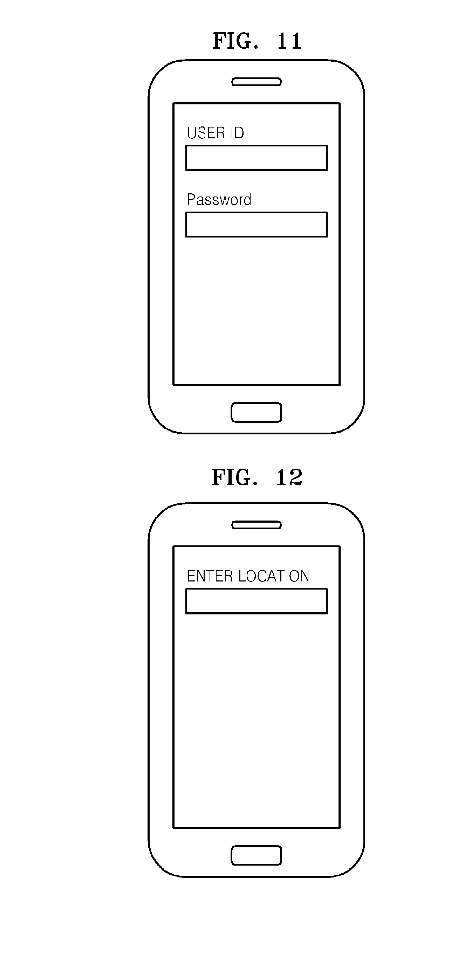

FIG. 11 is a view illustrating a user interface for subscribing to or logging into a reservation number issuing service according to an embodiment.

In operation S710 of FIG. 7, a login may be performed by inputting a user ID and password through the user interface shown in FIG. 11.

FIG. 12 is a view illustrating a user interface for receiving a location where the service is to be used from a user according to an embodiment.

When there is no information on a location where the service is to be used received from the service providing terminal 120 or there is no information on a predetermined location where the service is to be used, a user may enter information on a location where the service is to be used (i.e., enter location information) via the user interface shown in FIG. 12, and the user terminal 100 may receive the entered information.

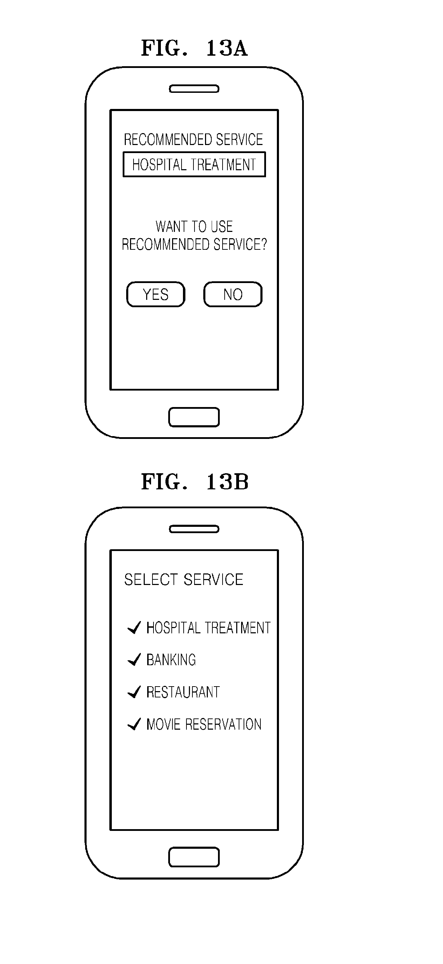

FIG. 13A is a view illustrating a user interface for inputting whether to use a recommended service when the recommended service is received from the service providing terminal 120 according to an embodiment.

In operation S420 of FIG. 4, a determination is made via the user interface shown in FIG. 13A on whether to use the recommended service.

FIG. 13B is a view illustrating a user interface for receiving a service to use from a user according to an embodiment.

In operation S330 of FIG. 3 or S430 of FIG. 4, a service to use is selected through the user interface shown in FIG. 13B.

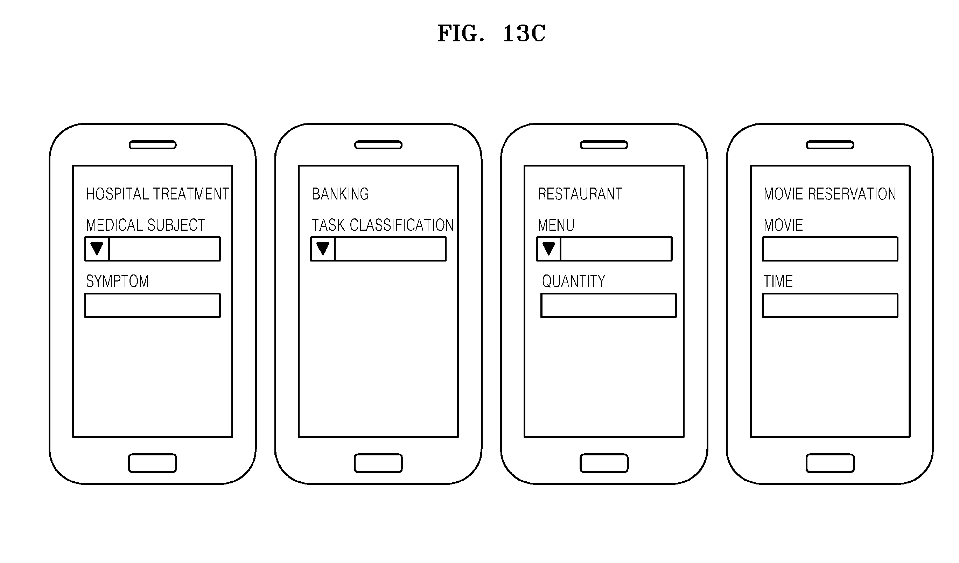

FIG. 13C is a view illustrating a user interface for receiving user information corresponding to a service from a user according to an embodiment.

A specific service may be determined by receiving an input from a user or receiving information on the specific service or information on a location where the service is to be used from the service providing server 110 or the service providing terminal 120.

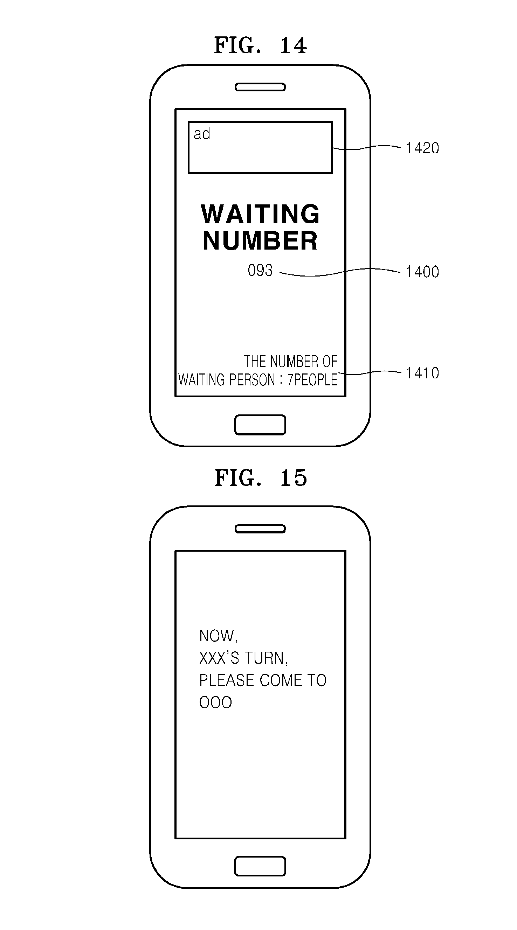

FIG. 14 is a view illustrating a method of displaying service information and additional information on a user terminal according to an embodiment.

According to an embodiment, the user terminal 100 may display a reservation number 1400 and the number of waiting person 1410 in service information and an advertisement 1420 in additional information on a screen as shown in FIG. 14.

FIG. 15 is a view illustrating a method of displaying an alarm message for a reservation order in the user terminal 100 according to an embodiment.

According to an embodiment, as shown in FIG. 15, the user terminal 100 receives an alarm message for a reservation order from the service providing server 100 and displays the received alarm message on a screen.

FIG. 16 is a view illustrating a user interface for displaying information stored in the user terminal 100, receiving information transmitted as user information, and transmitting the received information. As shown in FIG. 16, user information to be transmitted to the service providing terminal 120 may be determined by displaying a specific service and information stored in the user terminal 100 and receiving an input on the user interface, with regard to the displayed information.

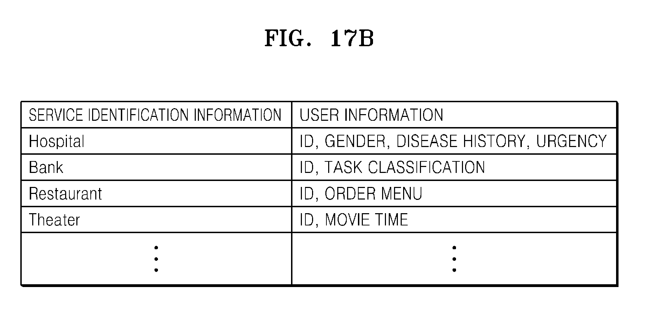

FIG. 17A is a view illustrating user information stored in the user terminal 100 according to an embodiment. Additionally, FIG. 17B is a view illustrating a table for determining user information to be transmitted based on service according to an embodiment. For example, as shown in FIG. 17A,when user information is stored in the user terminal 100 and service identification information for a specific service is "Hospital", information such as "gdhong" for ID, " man" for gender, "gastritis and disk " for medical history, and "A" for urgency may be transmitted as user information to the service providing terminal 120.

Methods of parallel processing execution according to the above-described embodiments may be recorded in non-transitory computer-readable media including program instructions (computer readable instructions) to implement various operations embodied by a computer to cause one or more processors to execute or perform the program instructions. The media may also include, alone or in combination with the program instructions, data files, data structures, and the like. Examples of non-transitory computer-readable media include magnetic media such as hard disks, floppy disks, and magnetic tape; optical media such as CD ROM discs and DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described embodiments, or vice versa. In addition, a non-transitory computer-readable storage medium may be distributed among computer systems connected through a network and computer-readable codes or program instructions may be stored and executed in a decentralized manner. In addition, the computer-readable storage media may also be embodied in at least one application specific integrated circuit (ASIC) or Field Programmable Gate Array (FPGA).

While embodiments have been particularly shown and described with reference to exemplary embodiments thereof, it will be understood by those of ordinary skill in the art that various changes in form and details may be made therein without departing from the spirit and scope of embodiments as defined by the following claims. Therefore, the above-mentioned embodiments are just exemplary in all respects, and embodiments are not limited thereto. For example, each single component may be separated into multiple components which are then separately implemented. Also, separated components may be combined together and implemented as a single component.

While the present disclosure has been particularly shown and described with reference to exemplary embodiments thereof, it will be understood by those of ordinary skill in the art that various changes in form and details may be made therein without departing from the spirit and scope of the present disclosure as defined by the following claims and their equivalents.

## Claims

1. A service information providing method of a user terminal, the method comprising:
transmitting, through short-range wireless communication, a service information request including user information of the user terminal to a service providing terminal providing a service to the user terminal;
receiving service information corresponding to the service information request and additional information according to the user information in the service information request from the service providing terminal; and
displaying the received service information and additional information,
wherein the method is performed using at least one processor.

2. The method of claim 1, wherein the receiving of the service information comprises receiving reservation information on the service.

3. The method of claim 1, wherein the additional information comprises information relating to a position of the service providing terminal.

4. The method of claim 1, wherein the transmitting of the service information request including user information to the service providing terminal comprises:
selecting user information relating to the service; and
transmitting the selected user information to the service providing terminal.

5. The method of claim 1, wherein the service information comprises a link for receiving additional information on the service information, and the displaying of the service information and the received additional information comprises displaying additional information received through the link.

6. The method of claim 1, wherein the additional information comprises a link for accessing information relating to the service, and the displaying of the additional information comprises displaying additional information received through the link.

7. The method of claim 1, wherein the additional information further comprises information for connecting to the service providing terminal through the short-range wireless communication.

8. The method of claim 1, wherein the receiving of the additional information comprises receiving advertisement information selected according to the transmitted service information request including the user information, and the displaying of the received service information and the additional information comprises displaying the received advertisement information.

9. The method of claim 1, wherein the user information comprises at least one of user identification information, identification information of the user terminal, a type of service, an e-mail address, a user rating, information on a reservation priority, a service use history of the user, and information requesting a reservation for service.

10. A service information providing method of a service providing server providing a service to the user terminal, the method comprising:
receiving a service information request, which includes user information of a user terminal and is received from the user terminal, to a service providing terminal through short-range wireless communication, through the service providing terminal;
generating service information corresponding to the received service information request and selecting additional information according to the user information included in the service information request; and
transmitting the generated service information and the selected additional information to the user terminal,
wherein the method is performed using at least one processor.

11. A service information providing method of a service providing terminal, the method comprising:
receiving a service information request including user information of a user terminal from the user terminal through short-range wireless communication;
filtering user information corresponding to a predetermined service from the user information included in the received service information request; and
transmitting the filtered user information to a service providing server,
wherein the filtered user information is used to generate service information, and
wherein the method is performed using at least one processor.

12. A service information providing method of a service providing terminal, the method comprising:
transmitting information on at least one recommended service stored in the service providing terminal to a user terminal;
receiving user information relating to a predetermined service from the user terminal through short-range wireless communication; and
transmitting the received user information to a service providing server,
wherein the predetermined service is included in the at least one recommended service transmitted to the user terminal, and
wherein the method is performed using at least one processor.

13. A user terminal configured to perform short-range wireless communication, the terminal comprising:
a short-range communicator to transmit a service information request including user information relating to a predetermined service to a service providing terminal through short-range wireless communication;
a communicator to receive service information corresponding to the service information request and additional information according to the user information in the transmitted service information request; and
a display to display the received service information and additional information.

14. A service providing server providing service information, the server comprising:
a receiver to receive a service information request including user information of a user terminal from the user terminal through short-range wireless communication;
a comparator to compare the user information included in the received service information request with information stored in the server;
a service information generator to generate service information and additional information on a basis of service information corresponding to the service information request received through the receiving unit and a comparison result of the comparison unit; and
a transmitter to transmit the service information and the additional information to the user terminal.

15. A service providing terminal providing service information, the terminal comprising:
a short-range communicator to receive a service information request including user information of a user terminal from the user terminal through short-range wireless communication and to transmit service information and additional information received from a service providing server to the user terminal;
an information extractor to select user information corresponding to a predetermined service from the user information included in the received service information request;
a communicator to transmit the user information selected by the information extracting unit to the service providing server and to receive the service information and additional information from the service providing server; and
a storage unit to store service identification information for identifying the predetermined service.
